# DEMANDE DE BREVET EUROPEEN

(11) **EP 1 230 840 A1**
(43) Date de publication de la demande: **14.08.2002**
(21) Numéro de dépôt: 02360058.8
(22) Date de dépôt: 08.02.2002
(51) Int. Cl.: A01G 17/06

(54) **Dispositif écarteur mobile auto-repositionnable pour fils releveurs et piquet pour supporter un tel dispositif**

(30) Priorité: 09.02.2001 FR 0101782
(71) Demandeur: Perchat, Alain, 51190 Avize (FR)
(72) Inventeur: Perchat, Alain, 51190 Avize (FR)
(74) Mandataire: Rhein, Alain

(57) **Abrégé**

L'invention concerne un dispositif écarteur mobile auto repositionnable pour fils releveurs, utilisés dans le domaine du palissage des végétaux et notamment de la vigne, et un piquet incorporant un tel dispositif.

Il est du type comportant deux branches (1) solidarisées à un piquet (8) et sont prévues aptes à prendre deux positions à savoir fermée où les fils releveurs (F) sont rapprochés l'un de l'autre, et ouverte où les fils releveurs (F) sont éloignés l'un de l'autre. Les branches (1) comportent chacune un moyen de pivotement (52) associé à un moyen de butée (55) leur permettant de passer, après libération des fils (F), de la position fermée à la position ouverte par gravité, et de la position ouverte à la position fermée par le rapprochement des fils (F) tandis que ledit support comporte des moyens (82) prévus aptes à permettre un guidage en translation verticale de l'extrémité pivotante (5) des branches (1).

## Description

La présente invention a pour objet un dispositif écarteur mobile auto repositionnable pour fils releveurs, utilisés dans le domaine du palissage des végétaux et notamment de la vigne, et un piquet incorporant un tel dispositif.

L'opération de palissage consiste à orienter la végétation dans la direction voulue. Durant la période précédent le palissage, la pousse de la vigne est active ce qui implique de réaliser le palissage dans un laps de temps très court.

Dans le domaine viticole, le palissage est réalisé au moyen de fils tendus sur des piquets alignés et régulièrement espacés. Un rang de vigne comporte plusieurs fils, et sur lesquels la végétation est attachée lors de l'opération de liage. Par ailleurs, deux fils sont solidarisés côte à côte aux extrémités supérieures des piquets l'un au moins desdits fils étant apte à être désolidarisé. Ce ou ces fils, appelés fils « releveurs » ou fils « balans », sont destinés à enserrer la partie haute de la végétation, la possibilité de désolidariser au moins l'un d'eux des piquets de rang facilitant l'introduction de la végétation entre eux. Après accrochage du ou des fils releveurs aux piquets, leur rapprochement est complété par des moyens de fixation amovibles tels que des agrafes.

D'une manière générale, avant d'effectuer les opérations de palissage, les fils releveurs traînent au sol, ce qui présente, en plus d'un risque accru de corrosion, l'inconvénient que les fils peuvent être emportés ou arrachés par les engins, lors des opérations de traitement.

De plus, avant le palissage, durant la période allant de la pousse au relevage du ou des fils releveurs, la végétation ne se trouve pas maintenue et cela peut, de ce fait, occasionner des dégâts plus ou moins importants sur la vigne, notamment en cas de vent ou de forte pluie, ce qui être préjudiciable à la future récolte.

Pour pallier les divers inconvénients précités, il a été proposé des dispositifs d'écarteurs adaptables au sommet des piquets tels que ceux proposés dans les documents EP 0 876 756 et CH 685 187.

Le dispositif décrit dans le document EP 0 876 756 se présente sous la forme d'un fil métallique plié de manière à former deux branches aptes à s'écarter élastiquement l'une de l'autre en sorte que les extrémités libres de ces branches, qui comportent chacune un moyen de retenue d'un fil releveur, s'éloignent l'une de l'autre pour prendre une position ouverte où les fils sont maintenus écartés, tandis qu'un moyen d'accrochage permet, après compression, de les maintenir réunies dans une position fermée en sorte que les fils enserrent la végétation.

Un tel dispositif a permis une avancée technique en ce sens qu'il maintient les fils à une certaine hauteur. Il présente toutefois un inconvénient lié à l'accrochage et au décrochage des deux branches, ces opérations nécessitant des efforts répétitifs qui deviennent vite épuisants pour l'opérateur.

D'autre part lors du relevage des fils releveurs, il ne suffit pas de remonter les fils, pour que la végétation se trouve bien prise entre lesdits fils, il est en effet plus aisé pour l'opérateur de remonter les fils, et de les écarter légèrement de la végétation en leur donnant un léger arc de cercle, enroulant ainsi la végétation afin de bien la prendre entre les deux fils. Or cette manière de procéder n'est pas réalisable avec le dispositif précité.

En effet avec ce dispositif d'écarteur le fait qu'il soit monobloc exige de se positionner d'abord face à chaque piquet et de remonter et de rapprocher les deux branches de l'écarteur, ce qui nécessite un effort non négligeable pour rapprocher et accoler les deux branches de l'écarteur, il faut en effet vaincre l'effet ressort, et ensuite verrouiller l'écarteur avec le crochet pour assurer la tenue des fils releveurs entre eux, d'où une perte de temps puisqu'il faut chercher l'endroit d'accrochage, alors que la végétation est abondante; ensuite il faut revenir en arrière et remonter les fils entre les deux piquets intermédiaires. De plus, après la taille de la vigne il faut passer à nouveau pour déverrouiller et désolidariser les deux fils releveurs, et les repositionner pour la prochaine campagne. On comprendra que cette exigence de verrouiller puis de déverrouiller l'écarteur, demande un certain temps, ce qui, répété à chaque piquet, est d'un coût non négligeable et pénalisant dans l'organisation du travail.

Le dispositif proposé dans le document CH 685 187 consiste en un dispositif écarteur pour fils releveurs qui présente deux branches articulées individuellement sur un support solidarisable à un piquet. Les branches comportent chacune en extrémité un moyen de retenue d'un fil releveur, tandis que l'autre extrémité peut pivoter tout en étant associée à des moyens de butée en sorte que la branche puisse prendre deux positions, l'une horizontale et l'autre verticale.

Outre l'inconvénient de l'impossibilité de pouvoir rapprocher suffisamment les fils releveurs, ce dispositif présente un inconvénient majeur que présente également le dispositif du document EP 0876 756, celui d'être inadapté au palissage mécanisé puisque leur manoeuvrement ne peut être réalisé que manuellement.

On connaît également par le document AU 484 117, un connecteur pour attacher des fils de palissage, et plus particulièrement pour maintenir écartés deux fils parallèles. Un mode de réalisation particulier de ce connecteur comprend deux fils de fer comportant à chaque extrémité une boucle, l'une pour le passage d'un fil de palissage, l'autre pour l'articuler en pivotement autour d'un pivot solidaire du piquet.

Puisque ne comportant pas de moyens de blocage dans une position verticale, ces connecteurs ne sont pas prévus pour être utilisés avec des fils releveurs, de toute façon ils ne permettraient pas un palissage mécanique en raison de la rigidité du déplacement des fils. En effet, une palisseuse automatique comporte des moyens permettant de relever la végétation, des moyens permettant de relever les fils releveurs et des moyens permettant de guider lesdits fils jusqu'à des moyens d'agrafage. La palisseuse automatique ramasse les fils releveurs qui traînent sur le sol, les remonte et les agrafe. Elle ne peut pas être utilisée avec des écarteurs mobiles lesquels figent la hauteur des fils, hauteur qui varie à chacun des piquets, alors qu'il serait techniquement complexe de prévoir une mobilité verticale des moyens de guidage et des moyens d'agrafage permettant de s'adapter à ladite hauteur.

On connaît également par le document US 4.023.307 un support de fils de palissage comprenant deux bras montés pivotants de manière limitée angulairement, portant chacun en extrémité un fil de palissage maintenu par un fil agencé en boucle et passant autour du piquet ainsi qu'autour de ladite extrémité afin de limiter le pivotement du bras. Un tel support, outre qu'il ne consiste pas en un écarteur pour fils releveurs puisque 1a position haute correspond à une position de libération du fil de palissage, présente le même inconvénient que celui du document AU 484 117 en ce qui concerne le palissage mécanique.

Enfin, on connaît par les documents US 3.690.033 et CH 568.001 des supports de fils de palissage comprenant deux bras montés pivotants sur un ou plusieurs pivots, et destinés à constituer des éléments robustes d'appui pour les fils de palissage, pour par exemple, dans le cas du support décrit dans le document US 3.690.033, être saisis et secoués par une machine à vendanger en vue de faire tomber les grappes.

Outre qu'ils ne consistent pas en des écarteurs mobiles pour fils releveurs, les supports décrits dans ces documents ne permettraient une opération de palissage mécanisé.

La présente invention a pour but de remédier aux divers inconvénients précités en proposant un dispositif d'écarteur utilisable aussi bien manuellement qu'en association avec une palisseuse automatique.

Le dispositif d'écarteur mobile selon l'invention est du type comportant deux branches solidarisées au piquet par l'intermédiaire d'un moyen support, dont les extrémités libres présentent chacune un moyen de retenue d'un fil releveur, et qui sont prévues aptes à prendre deux positions à savoir fermée où les fils releveurs sont rapprochés l'un de l'autre, et ouverte où lesdits fils releveurs sont éloignés l'un de l'autre, et il se caractérise essentiellement en ce que lesdites branches comportent chacune un moyen de pivotement associé à un moyen de butée, leur permettant de passer, après libération desdits fils releveurs, de la position fermée à la position ouverte par gravité, et de la position ouverte à la position fermée par le rapprochement desdits fils, tandis que ledit moyen support comporte des moyens prévus aptes à permettre un guidage en translation verticale de l'extrémité pivotante des branches par rapport audit support.

Selon une caractéristique additionnelle du dispositif selon l'invention, les branches sont réalisées en fil métallique, plié en sorte de former de part et d'autre d'une partie médiane rectiligne, à une extrémité, une boucle pour retenir le fil releveur et, à l'autre extrémité, une partie transversale de pivotement et une butée limitant l'angle de ce pivotement.

Selon un mode de réalisation particulier du dispositif selon l'invention, les branches comportent chacune à leur extrémité opposée à celle de retenue du fil, une sorte de boucle réalisée par pliage du fil métallique, constituant la partie transversale de pivotement, qui s'étend dans un plan faisant un angle avec la partie médiane rectiligne, et qui présente transversalement et en extrémité un brin rectiligne et, tandis que la boucle de retenue du fil s'étend dans un plan perpendiculaire audit plan contenant ladite boucle de pivotement.

Selon une autre caractéristique additionnelle du dispositif selon l'invention, la boucle apte à retenir le fil est pliée en sorte que d'une part soit formée au moins un peu plus d'une spire, d'autre part l'extrémité libre s'étende vers l'extérieur de boucle et soit à une distance de la spire qui permet l'engagement du fil releveur.

L'extrémité libre s'étend vers l'extérieur de la boucle sur une longueur suffisante pour permettre d'éviter le désengagement accidentel du fil releveur engagé dans ladite boucle lorsqu'il est tendu. Quand la boucle est de forme ronde, ladite longueur peut être sensiblement égale au rayon de ladite boucle.

Selon une autre caractéristique additionnelle du dispositif selon l'invention, les moyens prévus aptes à permettre le guidage en translation verticale de l'extrémité pivotante des branches dans le moyen support consistent pour chacune desdites branches en un élément qui délimite une lumière s'étendant verticalement et dans laquelle est engagé le moyen de pivotement de la branche.

Selon un mode de réalisation particulier du dispositif selon l'invention, le moyen support comporte des moyens de solidarisation au piquet adaptés à la nature de celui-ci, et qui consistent en des moyens de vissage ou de clouage pour des piquets en bois, ou des moyens d'encastrement ou d'encliquetage pour des piquets en métal.

Le moyen support peut faire partie intégrante du piquet, aussi la présente invention a également pour objet un tel piquet, équipé d'un dispositif d'écarteur selon l'invention, et qui se caractérisé en ce qu'il comporte des moyens permettant de retenir les branches dudit dispositif par leur moyen de pivotement tout en permettant la translation verticale de ce dernier.

Selon une caractéristique additionnelle du piquet selon l'invention, il comporte pour l'assujettissement de chacune des branches, un élément rectiligne vertical s'étendant parallèlement et à une faible distance de la paroi du piquet en sorte de créer une fente verticale apte à accueillir le moyen de pivotement.

Selon une autre caractéristique additionnelle du dispositif selon l'invention, il consiste en un piquet du type profilé présentant des plis longitudinaux en saillie ou des nervures, et en ce que deux plis opposés, ou nervures, comportent chacun, dans chacun de leurs versants, une découpe en sorte de créer la fente apte à accueillir le moyen de pivotement.

Quel que le soit le mode de réalisation considéré, le dispositif d'écarteur selon l'invention peut être utilisé soit manuellement, soit avec une palisseuse automatique puisque la mobilité verticale des branches autorise une variation de la hauteur des fils laquelle s'adapte à la hauteur des moyens d'agrafage de ladite palisseuse.

Les avantages et les caractéristiques du dispositif et du piquet selon l'invention, ressortiront plus clairement de la description qui suit et qui se rapporte au dessin annexé, lequel en représente plusieurs modes de réalisation non limitatifs.

Dans le dessin annexé :
La figure 1 représente une vue en perspective d'une partie du dispositif d'écarteur selon l'invention.
La figure 2 représente une vue en perspective d'un mode de réalisation particulier du dispositif écarteur selon l'invention.
La figure 3 représente une vue en perspective d'un autre mode de réalisation particulier du dispositif selon l'invention.
La figure 4 représente une vue en perspective d'une variante de la partie du dispositif de la figure 1.
La figure 5 représente une vue en perspective d'un mode de réalisation d'un piquet selon l'invention en vue de l'assujettissement d'un dispositif d'écarteur selon l'invention.
Les figures 6 et 7 représentent des vues partielles en perspective de variantes du dispositif selon l'invention.

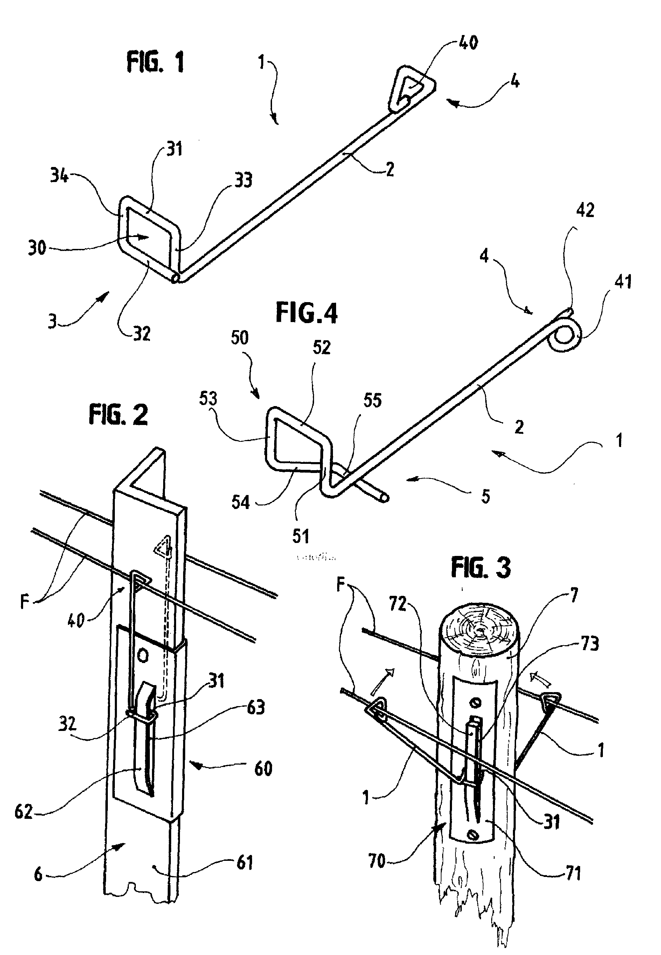

En référence à la figure 1, on peut voir l'une des deux branches 1 d'un dispositif d'écarteur selon l'invention, sachant que ces deux branches 1 sont identiques.

Cette branche 1 est réalisée par pliage d'un fil métallique, et elle comporte une partie médiane 2 rectiligne d'une longueur choisie en fonction de la distance dont on désire écarter les fils releveurs, non représentés, et deux extrémités dont l'une est pliée pour former un moyen 3 d'assujettissement à un piquet, également non représenté, tandis que l'autre est pliée pour former un moyen 4 de retenue d'un fil releveur.

Le moyen 3 d'assujettissement à un piquet consiste en une boucle 30 de forme sensiblement carrée ou rectangulaire, présentant transversalement deux brins rectilignes 31 et 32 sensiblement parallèles, et qui s'étend latéralement dans un plan faisant un angle avec la partie médiane rectiligne 2.

La boucle 30 est formée d'une succession de plis qui forment dans un premier temps, à la base de la partie médiane rectiligne 2, un premier brin 33, puis le brin 31, puis un brin 34 et enfin le brin 32, le brin 34 étant de préférence moins long que le brin 33 en sorte que, pour des raisons qui seront exposées plus loin, l'extrémité du brin 32 vienne prendre place sous le brin 33 à proximité du pli que celui-ci forme avec la partie médiane rectiligne 2.

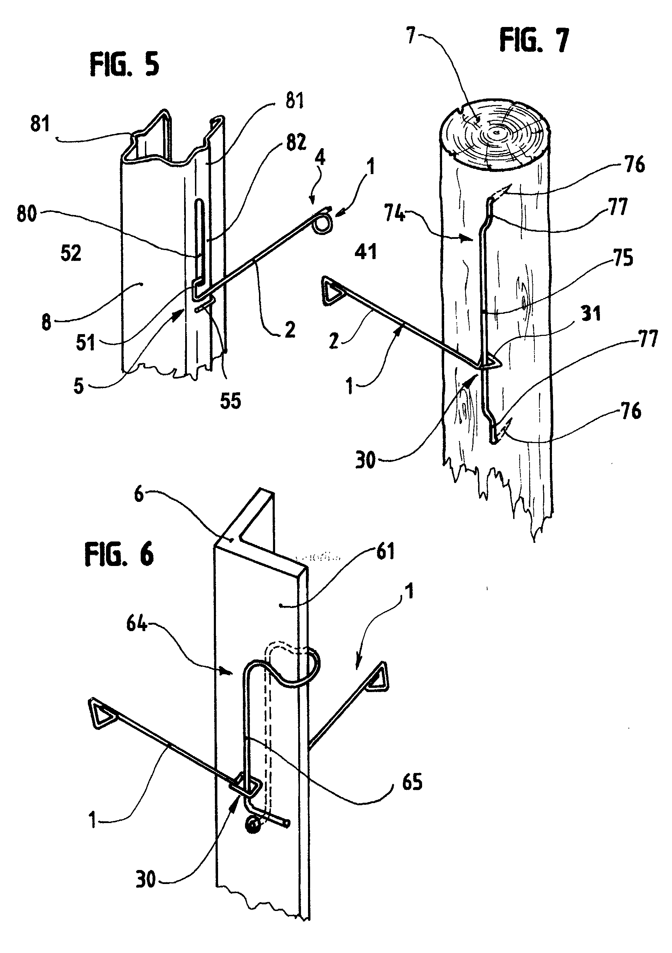

Le moyen 4 de retenue d'un fil releveur consiste en une boucle 40, s'étendant dans un plan parallèle à la partie médiane rectiligne 2 et perpendiculairement au plan contenant la boucle 30. Dans ce mode de réalisation la boucle 40 est de forme triangulaire, elle peut toutefois prendre une autre forme comme cela est visible sur les figures 4 et 5.

De préférence, la boucle 40 s'étend du côté duquel s'étend la boucle 30. On notera que la boucle 40 peut également s'étendre de l'autre côté, comme cela est représenté sur les figures 5, 6 et 7.

En référence maintenant à la figure 2, on peut voir un piquet 6 de type cornière en L, équipé d'un dispositif d'écarteur selon l'invention, lequel comprend un support 60 et deux branches 1. Le support 60 est d'une configuration adaptée à la forme du piquet 6, en l'occurrence il consiste en un profilé de section en U apte à être placé à cheval sur une aile 61 du piquet 6, en particulier sur l'aile parallèle aux fils de palissage.

Le support 60 comporte par ailleurs des moyens aptes à permettre le maintien des branches 1, par leur brin 31. Dans le mode de réalisation représenté où un seul de ces moyens est visible, ceux-ci consistent chacun en une lame 62 décollée du reste du support auquel elle reste solidaire par ses extrémités en sorte de créer un espace vertical 63 dans lequel est placé le brin 31 de la boucle 30 d'une branche 1.

La branche 1 peut pivoter librement, l'angle de pivotement est toutefois limité supérieurement par l'aile 61 du piquet 6, et inférieurement par le brin 32 de la boucle 30 qui constitue une butée du fait de son excentration par rapport à l'axe de pivotement.

Ainsi, l'angle que fait la branche 1 par rapport au piquet 6 est défini par l'angle que forment la boucle 30 et la partie médiane rectiligne 2.

On notera ici l'importance de la manière dont est formée la boucle 30, puisque la sollicitation mécanique la plus importante est réalisée lorsque la branche 1 est en appui en butée contre le brin 32, le fait que la partie médiane rectiligne 2 prenne appui sur celui-ci par l'intermédiaire du brin 33, permet à la boucle 30 de conserver une certaine rigidité et empêche son ouverture.

Les branches 1 sont disposées par paire, en vis à vis de chaque côté d'un piquet 6, elles maintiennent les fils F en position, préparant ainsi la végétation pour le palissage. Du fait de leur possible pivotement, ils répondent à toute sollicitation de l'opérateur qui agit sur les fils F pour le relevage et l'accolage des fils releveurs F. Le maintien en position fermée est réalisé de manière traditionnelle au moyen d'agrafes positionnées à cheval sur les deux fils releveurs F, sans avoir à s'occuper des branches 1.

Le relâchement des fils F est réalisé de manière automatique sans intervention spéciale d'un opérateur au niveau des branches 1 des dispositifs, puisque lors des opérations de taille de la vigne, les fils releveurs F se trouvent libérés des vrilles et des agrafes de palissage, et au fur et à mesure que la personne taille, les fils releveurs F subissent diverses sollicitations du fait que l'opérateur tire sur les sarments de vigne, en sorte que, libérés, les fils releveurs F sont entraînés par gravité et les branches 1 prennent la position ouverte.

On notera que le dispositif selon l'invention présente non seulement des avantages pour un palissage manuel, mais également pour un palissage mécanique. En effet, outre sa parfaite compatibilité avec l'emploi d'une palisseuse puisqu'il ne consiste qu'en un guide mobile, le fait qu'il ne soit pas nécessaire de ramasser le fil permet de concevoir des palisseuses moins complexes et donc moins onéreuses et plus fiables.

Par ailleurs, les branches 1 en plus de pouvoir pivoter autour de l'axe du brin 31, peuvent être translatée verticalement dans l'espace vertical 63, permettant ainsi une mobilité verticale des fils F.

Cette possible translation, outre les avantages qu'elle offre lors du palissage manuel du fait du parfait repositionnement du fil, est particulièrement avantageuse pour le palissage mécanique. En effet une palisseuse comporte des moyens permettant d'agrafer les deux fils, et de manière évidente il est nécessaire que les deux fils soient à la même hauteur que l'agrafeuse. Dans ce but, les palisseuses comportent des moyens de guidages du fils qui permettent d'amener ceux-ci au niveau de l'agrafeuse. La possibilité de translation permet ainsi un parfait positionnement des fils F sans que soit exercée la moindre contrainte sur les fils F.

En référence à la figure 3, on peut voir que dans le cas d'un piquet en bois 7, le dispositif selon l'invention comporte un support 70 adapté, qui consiste en une plaque 71 apte à être clouée ou vissée sur le piquet 7.

Le support 70 comporte un moyen permettant l'assujettissement d'une branche 1, qui consiste en l'occurrence en une lame verticale 72 décollée de la plaque 71 à laquelle elle reste rattachée par son extrémité inférieure, ménageant ainsi un espace 73 dans lequel peut se déplacer verticalement le brin 31 d'une branche 1.

Il est à noter que le support 70 pourrait très bien comporter un moyen de maintien d'une branche 1 identique à celui du support 60 précédemment décrit, et inversement.

En référence maintenant à la figure 4, on peut voir une variante d'une branche 1, qui comporte une partie médiane 2 rectiligne, un moyen 4 de retenue d'un fil releveur consistant en une boucle 41, et un moyen 5 d'assujettissement à un piquet, non représenté.

On notera que, contrairement à la boucle 40, la boucle 41 est de forme ronde, elle forme ainsi un peu plus d'une spire, en sorte de ménager un certain espace entre l'extrémité libre 42 du fil F, et la spire, espace suffisant à l'engagement du fil F lors de la mise en place de celui-ci. Par contre, l'extrémité libre 42 s'étend en dehors de la spire, en l'occurrence tangentement, pour d'une part faciliter l'engagement du fil F, et d'autre part en empêcher une sortie inopinée.

Le moyen 5 d'assujettissement consiste en une sorte de boucle 50 constituée d'une succession de brins et de plis, à savoir d'une part trois brins successifs 51, 52 et 53 formant un U qui s'étend dans un plan faisant un angle droit ou fermé avec la partie rectiligne 2, la partie transversale du U, c'est-à-dire le brin 52, constituant le moyen de pivotement ; et d'autre part, prolongeant le brin 53 et faisant avec celui-ci un angle plus grand que celui formé par le brin 51 et la partie rectiligne 2, un brin 54, puis un brin 55 parallèle au brin 52 et constituant le moyen de butée. Là encore les brins 52 et 55 s'étendent dans un plan faisant un angle avec la partie rectiligne 2.

En référence également à la figure 5, on peut voir un piquet 8 selon l'invention, comprenant à proximité de son extrémité supérieure une fente verticale 80 pratiquée dans un pli longitudinal 81 en saillie et dégageant ainsi une lame 82 permettant la translation d'une branche 1 dans un espace vertical 83. Un tel piquet 8 ne nécessite pas de support pour l'assujettissement des branches 1, les fentes 80, dont une seule est visible, venant de fabrication.

Le piquet 8 représenté est, de manière avantageuse, du type consistant en un profilé comportant des plis longitudinaux 81 lui donnant de la rigidité, il est alors aisé de pratiquer au niveau de chacun de deux plis 81 opposés, une fente dans chacun des versants de ce pli 81 pour permettre l'engagement de la boucle 50 d'une branche 1.

L'assujettissement de la boucle 50 est réalisée par introduction dans l'espace 83 successivement des brins 55, 54, 53 et 52, et en faisant repasser le brin 55 par-dessus la lame 82, blocage de la branche 1 en position ouverte étant assuré par les brins 52 et 55 qui encadrent la lame 82, tandis que les brins 51 et 53 viennent à plat contre la paroi du piquet 8 de part et d'autre du pli 81.

En référence maintenant aux figures 6 et 7 on peut voir que le dispositif selon l'invention, et plus particulièrement le support, peut présenter différentes formes selon la nature du piquet.

Sur la figure 6, le piquet consiste 1à également en une cornière sur l'aile 61 duquel est assujetti un support 64 fait d'un fil métallique plié en sorte de pouvoir pincer l'aile 61 et ménager une partie verticale 65 sur laquelle est fixée, avec possibilité de translation verticale, la boucle 30 d'une branche 1.

Sur la figure 7, on retrouve un piquet en bois équipé d'un support 74 fait d'un fil métallique plié en U, enfoncé dans le bois par ses extrémités 76, et dont la partie intermédiaire 75, disposée verticalement, demeure, par l'intermédiaire de butées 77, à une certaine distance de la surface du piquet 7 pour permettre une solidarisation avec possibilité de translation de la boucle 30 d'une branche 1.

On notera que dans une variante, visible sur la figure 7, essentiellement réservée aux modes de réalisation des figures 6 et 7, la boucle 30 de pivotement peut, avantageusement, présenter la forme d'un triangle, dont la base consiste en la partie rectiligne 31, et dont la pointe est rattachée à la partie intermédiaire 2. Cette configuration favorise le centrage de la branche 1 lorsque la translation verticale doit être réalisée sur un fil comme cela est le cas avec les parties verticales 65 et 75.

## Revendications

1. Dispositif écarteur mobile auto repositionnable pour fils releveurs, utilisés dans le domaine du palissage des végétaux et notamment de la vigne du type comportant deux branches (1) solidarisées à un piquet (6 ; 7 ; 8) par l'intermédiaire d'un moyen support (60 ; 70 ; 74 ; 81), dont les extrémités libres présentent chacune un moyen (4) de retenue d'un fil releveur (F), et qui sont prévues aptes à prendre deux positions à savoir fermée où les fils releveurs (F) sont rapprochés l'un de l'autre, et ouverte où lesdits fils releveurs (F) sont éloignés l'un de l'autre, **caractérisé en ce que** lesdites branches (1) comportent chacune un moyen de pivotement (31 ; 52) associé à un moyen de butée (32 ; 55) leur permettant de passer, après libération desdits fils releveurs (F), de la position fermée à la position ouverte par gravité, et de la position ouverte à la position fermée par le rapprochement desdits fils (F) tandis que ledit moyen support (60 ; 70 ; 74 ; 81) comporte des moyens (62 ; 72 ; 75 ; 82) prévus aptes à permettre un guidage en translation verticale de l'extrémité pivotante (3 ; 5) des branches (1) par rapport audit moyen support (60 ; 70 ; 74 ; 81).

2. Dispositif selon la revendication 1, **caractérisé en ce que** les branches (1) sont réalisées en fil métallique, plié en sorte de former de part et d'autre d'une partie médiane rectiligne (2), à une extrémité, une boucle (40 ; 41) pour retenir le fil releveur (F) et, à l'autre extrémité, une partie transversale (31 ; 52) de pivotement et une butée (32 ; 55) limitant l'angle de ce pivotement.

3. Dispositif selon la revendication 2, **caractérisé en ce que** les branches (1) comportent chacune à leur extrémité opposée à celle (40) de retenue du fil (F), une sorte boucle (30 ; 50) constituant la partie transversale de pivotement, qui présente transversalement et en extrémité un brin rectiligne (31; 52), tandis que la boucle (40 ; 41) de retenue du fil (F) s'étend dans un plan perpendiculaire audit plan contenant ladite boucle de pivotement (30 ; 50).

4. Dispositif selon la revendication 3, **caractérisé en ce que** la boucle (40 ; 41) apte à retenir le fil (F) est pliée en sorte d'une part que soit formée au moins un peu plus d'une spire ; d'autre part que l'extrémité libre (42) s'étende vers l'extérieur de boucle (40 ; 41) et soit à une distance de la spire qui permet l'engagement du fil releveur (F).

5. Dispositif selon l'une quelconque des revendications précédentes, **caractérisé en ce que** les moyens (62 ; 72 ; 75 ; 82) prévus aptes à permettre le guidage en translation verticale de l'extrémité pivotante (3 ; 5) des branches (1) dans le moyen support (60 ; 70 ; 74 ; 81) consistent pour chacune desdites branches (1) en un élément (62 ; 72 ; 75 ; 82) qui délimite une lumière (63 ; 73 ; 80) s'étendant verticalement et dans laquelle est engagé le moyen de pivotement (31 ; 52) de la branche (1).

6. Dispositif selon l'une quelconque des revendications précédentes, **caractérisé en ce que** le moyen support (60 ; 70 ; 74 ) comporte des moyens de solidarisation au piquet (6 ; 7) adaptés à la nature de celui-ci, et qui consistent en des moyens de vissage ou de clouage pour des piquets en bois (7), ou des moyens d'encastrement ou d'encliquetage pour des piquets en métal (6).

7. Piquet équipé d'un dispositif d'écarteur selon l'une quelconque des revendications 1 à 5, **caractérisé en ce qu'**il comporte des moyens (82) permettant de retenir les branches (1) dudit dispositif par leur moyen de pivotement (31 ; 52) tout en permettant la translation verticale de ce dernier.

8. Piquet selon la revendication 7, **caractérisé en ce qu'**il comporte pour l'assujettissement de chacune des branches (1), un élément rectiligne vertical (82) s'étendant parallèlement et à une faible distance de la paroi du piquet (8) en sorte de créer une fente verticale (80) apte à accueillir le moyen de pivotement (31 ; 52).

9. Piquet selon la revendication 8, **caractérisé en ce qu'**il consiste en un piquet (8) du type profilé présentant des plis longitudinaux (81) en saillie ou des nervures, et **en ce que** deux plis (81) opposés, ou nervures, comportent chacun, dans chacun de leurs versants, une découpe en sorte de créer la fente (80) apte à accueillir le moyen de pivotement (31 ; 52).
